(19) Europäisches Patentamt
European Patent Office
Office européen des brevets

(11) **EP 3 617 922 A1**

(12) **EUROPEAN PATENT APPLICATION**

(43) Date of publication:
**04.03.2020 Bulletin 2020/10**

(51) Int Cl.:
*G06F 21/44* (2013.01)  *H04L 29/06* (2006.01)
*H04L 29/08* (2006.01)  *H04W 12/00* (2009.01)
*H04L 12/26* (2006.01)  *H04J 3/06* (2006.01)

(21) Application number: **18386027.9**

(22) Date of filing: **31.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Niometrics (Pte.) Ltd.**
**Singapore 188778 (SG)**

(72) Inventors:
 • **Akritidis, Periklis**
   **188778 Singapore (SG)**

 • **Halevidis, Constantinos**
   **Athens 11521 (GR)**
 • **Katimertzoglou, Petros**
   **Athens 11521 (GR)**
 • **Papadogiannaki, Eva**
   **Athens 11521 (GR)**

(74) Representative: **Kilimiris, Constantinos**
   **Patrinos & Kilimiris**
   **7, Hatziyianni Mexi Street**
   **115 28 Athens (GR)**

(54) **APPARATUS AND METHODS FOR DERIVING FINGERPRINTS OF COMMUNICATIONS DEVICES**

(57) A server apparatus (226) for deriving a fingerprint of a communications device (202) comprises a processor (232) and a memory (234). The processor controls the apparatus to execute instructions (236) stored in the memory: to receive a first data flow (112a) and a second data flow (112b) from the communications device, the first data flow comprising data indicative of a first TCP timestamp (104a), and a first real timestamp (106a) of the communications device, and the second data flow comprising data indicative of a second TCP timestamp (104b) and a second real timestamp (106b) of the communications device. The fingerprint is derived based on the first and second TCP timestamps and the first and second real timestamps. A server apparatus (250) receives a first real timestamp and first fingerprint for a first device (202) and a second real timestamp and a second fingerprint for a second device. The server apparatus determines whether the first real timestamp and the second real timestamp were received on their respective networks (204, 206) within a predetermined time period and whether the first fingerprint and the second fingerprint are within a fingerprint margin of one another and matches the first device and the second device as being, potentially, the same device.

Figure 3(a)

## Description

### Technical Field

The invention relates generally to the field of communications network data traffic analysis. One aspect of the invention relates to an apparatus for deriving a fingerprint of a communications device. Another aspect of the invention relates to a server apparatus for matching communications devices transitioning between communication networks. Another aspect of the invention relates to a method for deriving a fingerprint of a communications device. Another aspect of the invention relates to a method for matching communications devices transitioning between communication networks.

One aspect of the invention has particular, but not exclusive, application for analysing data received in respect of devices transitioning across communication networks, in particular across mobile or fixed (broadband) networks, and to match data relating to a device departing from a first network and data relating to a second device that arrives on the second network as being, potentially, data from or relating to the same device. That is, it may be possible to flag the first device and the second device being, possibly, the same device.

### Background

Over the years, the number of connected devices grows exponentially. Many households have a broadband Internet connection that is able to support numerous and diverse types of communications devices. In addition, end users may also take advantage of mobile data plans from telecommunication network operators in order to increase the time window that they remain connected. A single communications device can shift between different network connections (e.g. home, public and mobile networks) during a single day.

Device - as well as user - cross-identification has always been a very attractive field of study. The existing state-of-the-art has tried to determine what kind of traffic properties could possibly reveal adequate information to successfully identify a single device inside a network.

Kohno et al. [1] introduced the concept of "remote physical device fingerprinting" by exploiting the skews of the internal clocks of the devices and posited that this method could be used in tracking of a device across different access points (among other uses). Several refinements and improvements to the clock skew calculation have been proposed [2], [3]. Subsequently, attempts were made to ascertain whether the clock skew based method could reliably identify remote computers.

Swati et al. [4], from a sample of 10 handheld devices, found that the clock skew fingerprints of these devices are not stable, while Polcak and Frankova [5], using part of the traffic of their university's network and at most 649 hosts, reached the conclusion that reliable device identification cannot be achieved due to the distribution of the clock skew. Additionally, Cristea and Groza [6] successfully distinguished Android smartphones behind a WiFi network using ICMP timestamps to calculate the clock skew. These approaches take advantage of clock-related packet data (i.e. packet timestamp, TCP and ICMP timestamps) in order to extract adequate information for device fingerprinting.

Furthermore, significant work has been made towards identifying the different devices behind Network Address Translation (as is usually the case for fixed broadband connections) using the IPID field of TCP packets [7], and subsequently through TCP timestamps [8], [9].

Other relevant works study how easily detectable is a single device using higher level information retrieved by the generated network traffic. Acar et al. explore the prevalence of three persistent active web tracking mechanisms [10]. Similarly, Vanrykel et al. study the emission of unique identifiers (such as Android ID, IMEI, MAC, etc.) from 1260 apps [11]. Additionally, significant work has been undertaken to identify the privacy related leaks and vulnerabilities introduced by advertising libraries embedded in mobile applications [12], [13], [14], [15]. Some of these tracking mechanisms may be used to identify devices across different networks.

### Summary

Aspects of the invention are as set out in the independent claims. Some optional features are defined in the dependent claims.

Implementation of the techniques disclosed herein may provide significant technical advantages.

In at least some implementations, the techniques disclosed herein may provide for transparency in device mobility. The ability to identify devices moving or transitioning across communication networks and in particular across mobile / fixed (broadband) networks may hold significant value to network operators.

In at least some implementations, the techniques disclosed herein allow for passive methods of persistent physical device identification and matching of devices across multiple mobile/fixed (broadband) networks through a simplified model of the arrivals and departures from the different networks, and the use of the emitted TCP timestamps for device fingerprinting. More specifically, the arrivals and departures of devices to and from different networks may be used to generate a number of events. These events can be used to find potential matches between two devices. An attempt is made in order to match data received in respect of a (first) device departing from a first network with a (second) device that arrives on a second network. Preferably, the cross reference is made with reference to multiple data records received for multiple devices transitioning from the first network with respect to data received for multiple devices transitioning to the second network. The possible matches are evaluated using device fingerprints which may be derived using TCP timestamp and real timestamp data.

Further, another potential benefit is that it may be possible to track the movements of a person as they move from one geographic location to another and, in doing so, transition from one communications network to another.

An ancillary benefit may be realised in that communication network operators with fixed (broadband) and mobile networks can benefit from a consolidated view of their subscribers, in which they can detect whether their mobile customers make use of their fixed Internet products and vice versa. This consolidated view can help in deriving insights that can be used for the acquisition of new customers (through the detection of competitor mobile devices connecting to their fixed connections), as well as for the retention of current customers and cross-selling.

Other possible benefits which may be gained by this capability include the detection of Wi-Fi quality problems (an issue called ping-pong due to the frequent transitions between the two networks).

It is also to be noted that the connection of a device may swap between a Wi-Fi network and mobile data for small fragments of time, without any manual input, and such transition data may also be usable with the techniques disclosed herein. The reasons behind this may be twofold: (i) better network connectivity experience settings and (ii) power saving.

> a) Smart network switching: Mobile device vendors willing to maximize user experience offer certain built-in components which may use mobile data when Wi- Fi connectivity is poor, it automatically evaluates Wi-Fi connectivity in order to switch between Wi-Fi and mobile data. Furthermore, there are a number of applications that also offer this kind of functionality.
>
> b) Power saving configuration: Modern smart mobile devices disable the Wi-Fi connection when the device is in sleep mode to preserve power consumption (this functionality may be enabled by default, although configurable). In this way, however, remote notifications would be unable to reach the device during sleep time. In order to keep the user from not receiving this type of notifications, devices use mobile data instead.

Typical network traffic generated by modern mobile devices can expose significant information about a device's underlying hardware, type and operating system. This kind of information may be obtained through the TCP timestamps and/or the User-Agent strings that are transmitted within a HTTP packet header.

Furthermore, the User-Agent (UA) strings emitted by the devices may be used to reduce the set of devices for which a possible match is considered. Yet further, processing of location data received in respect of the devices - for example, geo-tag information - may allow for increased certainty or confidence that the devices are a match. All this information can be retrieved while passively observing the device generated network traffic.

## Brief Description of the Drawings

The invention will now be described, by way of example only, and with reference to the accompanying drawings in which:

> Figure 1 is a schematic block diagram of a TCP packet header and a data flow.
> Figure 2 is a schematic block diagram illustrating a communications system.
> Figure 3 is a series of flow diagrams illustrating a method, performed in a server apparatus, for deriving a fingerprint of a communications device.
> Figure 4 is a series of graphs showing some typical cases of the temporal evolution of the emitted TCP timestamps of mobile devices.
> Figure 5 is a series of graphs showing the distribution of the effective TCP timestamp rate which was calculated from a sample of TCP flows from a mobile network with a total duration of 1-hour.
> Figure 6 is a graph showing the TCP timestamp cumulative distribution of the TCP clocks of the sampled mobile devices.
> Figure 7 is a flow diagram illustrating a method, performed in a server apparatus, for matching communications devices transitioning between communications networks.
> Figure 8 is a diagram illustrating the transitions of devices from and to the different networks, with these being modelled as T-S-T.
> Figure 9 is a graph showing the cumulative distribution function of the UA string count per fixed connection and mobile device from a single day sample.
> Figure 10 is a chart showing the set intersection ratio of UA strings across two consecutive half-hours per mobile device.
> Figure 11 is a graph showing the duration of overlapping activity as negative values as well as the duration of the activity gap.
> Figure 12 is a graph showing the distribution of idle time and compared to the transition inactivity.
> Figure 13 is a contour plot showing the median transitions per device per day in compliance to the T-S-T temporal restrictions.

## Detailed Description

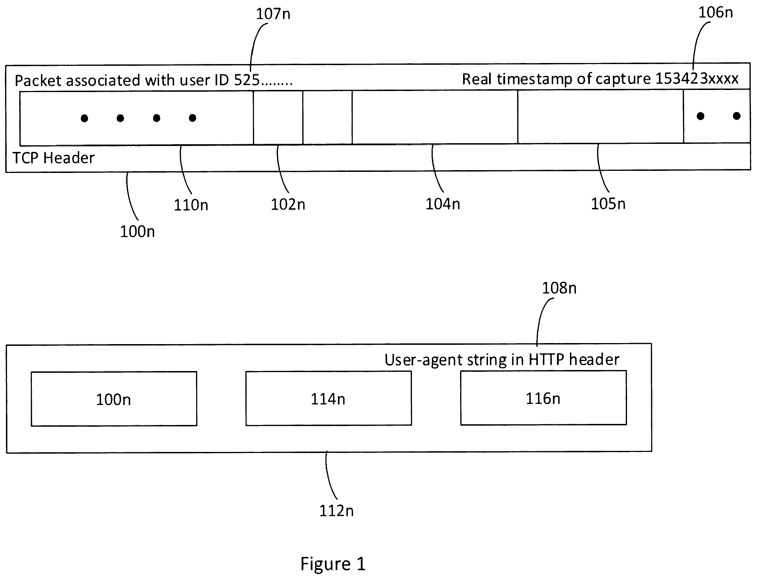

Referring first to Figure 1, a schematic block diagram of a TCP packet header 100n is illustrated. Not every field of the TCP packet header is illustrated, but the following fields relevant to the ensuing discussion are illustrated: the timestamp options field 102n, the first timestamp value field TS Value (TSval) 104n, the second timestamp value field TS Echo Reply (Tsecr) 105n, the real timestamp 106n, the user ID 107n, and the user-agent string 108n. The real timestamp 106n is the timestamp at which the packet is processed by the methods which will be described below. Each packet is associated using the control plane signalling traffic with the user ID 107n. The user ID in mobile networks may be the International Mobile Subscriber Identity (IMSI), the Mobile Station International Subscriber Directory Number (MSISDN), etc., while in fixed networks it may be an ID uniquely identifying a fixed connection. Discussion of the remaining fields 110n of the packet header is omitted for the sake of brevity.

By way of background, according to RFC 1323 "TCP Extensions for High Performance" [16], if the TCP Timestamps Option (TSopt) 102n is set, the header 100n of a TCP data packet contains two 4-byte timestamps. The first timestamp value, TS Value (TSval) 104a, contains the current value of the TCP timestamp clock of the communications device 202. The second timestamp, namely the TS Echo Reply (TSecr) 105a, echoes the timestamp value that was sent by the remote TCP in the TSval field. The timestamp value that is sent in the TSval field 104a is obtained from a virtual clock, which is required to be approximately proportional to real time.

The TCP Timestamps Option field 102 is mainly used by two mechanisms for TCP high performance: (i) Round Trip Time Measurement (RTTM) and (ii) Protect Against Wrapped Sequences (PAWS). Nevertheless, the information that carries a TCP Timestamp Option field may be even richer. Since the timestamp value is a constant, strictly monotonous, it can reveal information about the device itself. For instance, it is known that retrieving a number of TCP timestamps originated from a single device allows the calculation of the clock's nominal frequency, as well as the device's uptime. In addition, it is known that the analysis of the TCP timestamp, along with the clock skew of a device can be used for remote device fingerprinting, exposing information about the underlying operating system, while distinguishing if a device uses tethering or is behind a NAT.

Data is transmitted from devices in "data flows". A data flow can be defined as the data packets transmitted from a source device to a destination for a particular purpose. For instance, one exemplary type of a data flow is the packets transmitted from a device in a particular web browsing session a user of the device participates in with, for example, a mobile web browser application resident in a mobile communications device.

Figure 1 also illustrates a schematic block diagram of a data flow 112n. Data flow 112n comprises at least the first packet comprising TCP packet header 100n. In the example of Figure 1, this illustrates two additional packets 114n, 116n. Each data flow may be associated with a user-agent string 108n transmitted within the HTTP header.

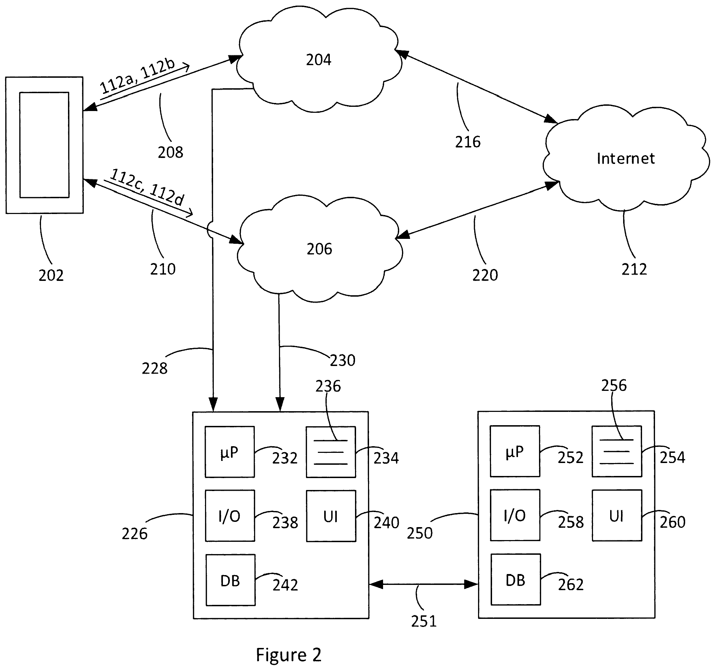

Figure 2 is a schematic block diagram illustrating a communications system 200. System 200 comprises handheld communications device 202 which is capable of communicating through first network 204 (for example, a fixed, Wi-Fi network allowing the user of device 202 to access and communicate through the Internet) and second network 206 (for example, a mobile, cellular network, again allowing the user of device 202 to access and communicate through the Internet). Communications device 202 accesses first network 204 through communications channel 208 and accesses second network 206 through communications channel 210. For instance, communications device 202 transmits data flows 112a, 112b through communications channel 208 to first network 204 and data flows 112c, 112d through communications channel 210 to second network 206.

Of course, as is well-known, communications device 202 can perform a plethora of tasks via either or both of communication networks 204, 206, for instance, communicating with other recipient devices (omitted from Figure 2 for the sake of clarity) connected to the internet 212 (for example a mobile communications device of a first recipient user with whom user of device 202 may communicate, or a web server having content stored thereon which user of device 202 wishes to access on, for example, a mobile application web browser resident on communications device 202).

Also illustrated in Figure 2 is server apparatus 226 for implementing the novel techniques disclosed herein for deriving a "fingerprint" for communications device 202. indeed, apparatus 226 is configured to derive multiple fingerprints for multiple other communications devices connected to communication networks 204 and 206, although these devices are omitted from Figure 2 for the sake of clarity. The operation of apparatus 226 will be discussed in further detail below.

Server apparatus 226 may be a single server apparatus as illustrated schematically in Figure 2, or have the functionality performed by the apparatus 226 distributed across multiple server apparatus components. Server apparatus 226 establishes a communications channel 228 with first network 204. In this respect, apparatus 226 may be a probe server of sorts able to "probe" or "tap" data transmitted from, amongst others, communications device 202 transmitted through first communications network 204. Apparatus 226 also establishes a communications channel 230 with second network 206. In this respect, apparatus 226 may be able to "probe" or "tap" data transmitted from, amongst others, communications device 202 transmitted through second communications network 206. The probing or tapping points can be placed at point in the network subject to ensuring TCP timestamp overwriting, as discussed below, does not occur. In one arrangement, apparatus 226 taps mobile network traffic just downstream of the GGSN and PGW and as such, any TCP timestamp overwriting does not affect our implementation.

In the example of Figure 2, apparatus 226 may comprise a number of individual components including, but not limited to, one or more microprocessors 232, a memory 234 (e.g. a volatile memory such as a RAM) for the loading of executable instructions 236, the executable instructions defining the functionality the apparatus 226 carries out under control of the processor 232. Apparatus 226 also comprises an input/output module 238 allowing the apparatus 226 to communicate through communications channels such as channels 228, 230. User interface 240 is provided for user control and may comprise, for example, conventional computing peripheral devices such as display monitors, computer keyboards and the like. Apparatus 226 also comprises a database 242, the purpose of which will become readily apparent from the following discussion.

Figure 2 also illustrates server apparatus 250 which receives fingerprints derived by fingerprinting apparatus 226 over communications channel 251. Server apparatus 250 operates to flag potential matches in the received fingerprints as will also be discussed in further detail below.

Server apparatus 250 may be a single server as illustrated schematically in Figure 2, or have the functionality performed by the server apparatus 250 distributed across multiple server apparatus components, or even within the server apparatus 226 in whole or in part. Server apparatus 250 may comprise a number of individual components including, but not limited to, one or more microprocessors 252, a memory 254 (e.g. a volatile memory such as a RAM) for the loading of executable instructions 256, the executable instructions defining the functionality the server apparatus 250 carries out under control of the processor 252. Server apparatus 250 also comprises an input/output module 258 allowing the server apparatus 250 to communicate through communications channels such as channel 251. User interface 260 is provided for user control and may comprise, for example, conventional computing peripheral devices such as display monitors, computer keyboards and the like. Server apparatus 250 also comprises a database 262, the purpose of which will become readily apparent from the following discussion.

In one implementation, a TCP flow log based on activity of devices in the networks over a period of time is generated by apparatus 226, or by a separate probing device (if provided). Optionally a user-agent (to be discussed in more detail below) log is also generated. The TCP flow logs record the first packet per flow and has fields for the TCP timestamp 104n, real timestamp 106n and the user ID 107n. Preferably, the first packet per flow is used as subsequent packets may have the TCP Timestamp Options disabled. Packets in respect of multiple network transitions - whether for one device transitioning multiple networks, or multiple devices transitioning multiple networks - are logged and these TCP flow logs may be used to generate the arrival/departure logs, which may also include the device fingerprint. In some implementations, the apparatus 226 may be capable of recording in a database 242, entries for the data indicative of the TCP timestamp 104n, the real timestamp 106n for every data flow 112n of every communications device 202n in every communication network.

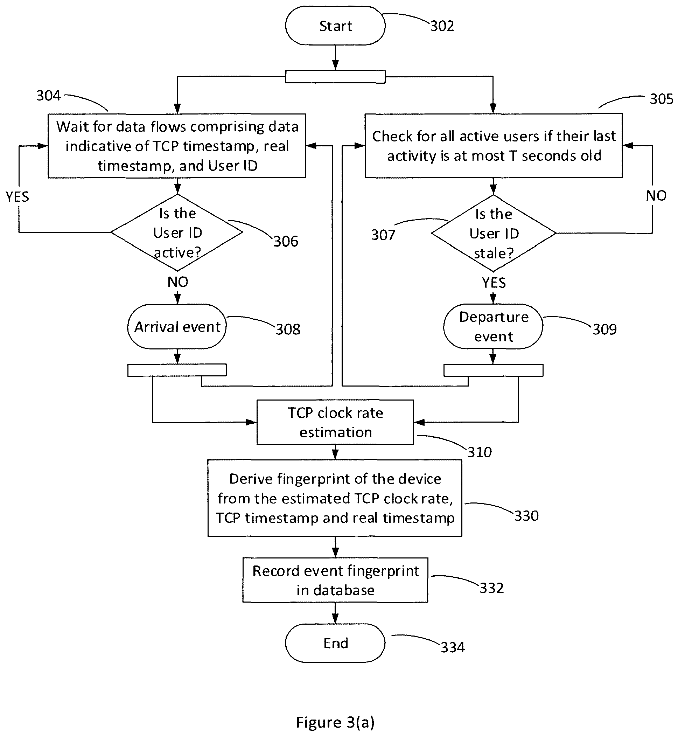

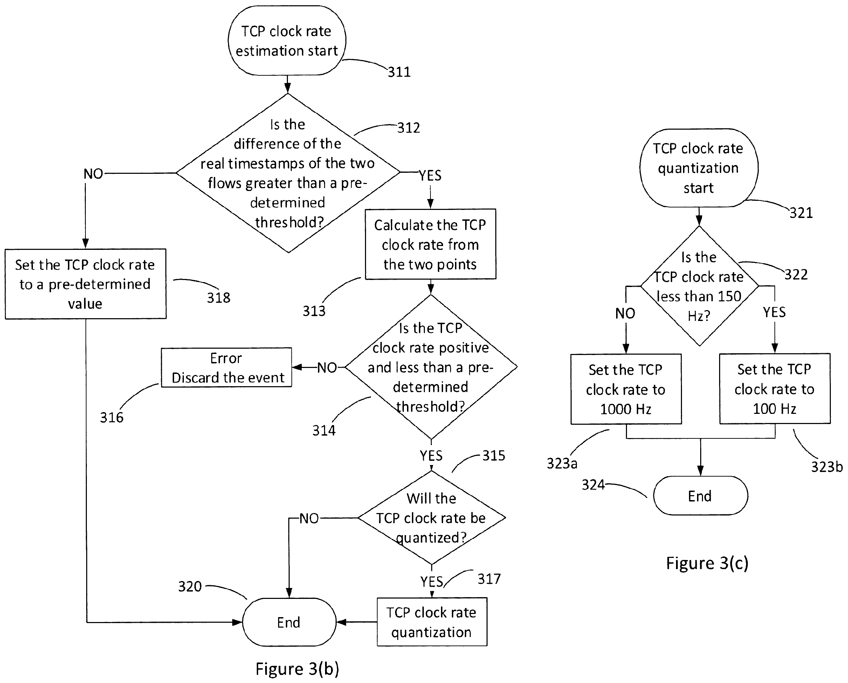

Exemplary techniques for "fingerprinting" of devices such as communications device 202, as may be implemented in apparatus 226 are now described with reference to Figure 3. This is a series of flow diagrams illustrating a method, performed in an apparatus such as apparatus 226, for deriving a fingerprint of a communications device 202. As shown in Figure 3, the method 300 starts at step 302. Referring first to Figure 3(a), in this example, the apparatus moves on to parallel steps 304 and 305, which may or may not be conducted simultaneously. At step 304, the apparatus 226 receives data flows 112a, 112b (or probed or tapped packets therefrom) as transmitted by communications device 202 through network 204. These data flows, or, rather, the packets therein, comprise data indicative of the TCP timestamp values 104n, 105n, real timestamp 106n, and the user ID 107n from the communication devices, as illustrated in and described with reference to Figure 1. The first data flow 112a, comprises data indicative of a first TCP timestamp 104a, and a first real timestamp 106a of the communications device, and the second data flow 112b comprises data indicative of a second TCP timestamp 106b and a second real timestamp 106b of the communications device 202. The apparatus 226 records in a database 242, entries for the data indicative of the first and second TCP timestamps 104n, and the first and second real timestamps 106a, 106b of the data flows 112a, 112b of the communications device 202.

At step 306, apparatus 226 examines whether the user ID 107n belongs to an active user or not. An active user for the current purposes is a user for which is (or is thought to be) connected to the network because a data flow 112 was recorded from that user's device in the last T seconds, where T is a pre-determined value, for example 600 seconds. If the user is active, the last-seen timestamp of the user is updated in the table of active users with the received real timestamp 106n, and the apparatus moves back to step 304. If the user is not active, then the user must be newly-arrived to the network and an arrival event 308 is recorded, and the user ID is added to the table of active users.

At step 305, apparatus 226 checks whether the last-seen timestamps of the entries of the table of active users are at most T (e.g. 600) seconds old. If the last-seen timestamp is older than T, for the purposes of the following, the user ID is considered to be stale; the user is considered to have departed from that network because the user's device has not been active on that network for such a long time. At step 307, each user ID is checked for staleness, and if so, apparatus 226 moves to step 309, a departure event 309 is recorded and the user ID is removed from the table of active users.

After steps 308 and 309, apparatus 226 moves to step 310 in which the TCP clock rate is estimated. As the effective TCP clock rate can be dependent on a number of factors such as device type, device activity, battery charge, etc., an estimation method may be usefully employed. In some implementations, on the arrival of a device to the network, the effective TCP clock rate is calculated from the first two data flows only if the real time stamp difference is greater than a predetermined threshold (for example one second). This approach minimises memory-loading requirements. In other implementations, other methods of rate estimation may be utilised including, but not limited to, rolling linear regressions (e.g. rolling weighted linear regression), machine learning models, and so on.

An exemplary technique for estimating the TCP clock rate is presented in Figure 3(b) with this procedure starting at step 311. At step 312, the apparatus 226 reads at least the first data packet of each of the first data flow 112a and the second data flow 112b of the communications device 202 and compares the first real timestamp 106a and the second real timestamp 106b of the communications device 202. The apparatus 226 determines if a real timestamp difference between the first real timestamp 106a and the second real timestamp 106b is greater than a predetermined threshold. The predetermined threshold is chosen to limit the impact of network jitter on the TCP clock rate estimation. The predetermined threshold may be, for example, 1 second. If the real timestamp difference between the first real timestamp 106a and the second real timestamp 106b is greater than a predetermined threshold, the apparatus moves to step 313, and derives the TCP clock rate estimation. In this example, the timestamp values are mapped to a plane with the TCP timestamp values on one axis and the real timestamp values on the other axis. First and second points are plotted on the plane for the first and second data flows based on the TCP and real timestamp values for each of the first and second data flows. The gradient of the slope between the two points is calculated. Then apparatus 226 derives the TCP clock rate estimation as the gradient of this slope.

Therefore, it will be appreciated that server apparatus 226 is configured to derive the TCP clock rate estimation of the device by: determining if a real timestamp difference between the first real timestamp and the second real timestamp is above a real timestamp difference threshold; determining a TCP timestamp difference from the first TCP timestamp and the second TCP timestamp; determining a timestamp slope using the real timestamp difference and the TCP timestamp difference; and deriving the TCP clock rate estimation of the device as the timestamp slope; or setting the TCP clock rate estimation of the device to a predetermined TCP clock rate value if the real timestamp difference is not above the real timestamp difference threshold.

If the real timestamp difference between the first real timestamp 106a and the second real timestamp 106b is not greater than the predetermined threshold, the apparatus moves to step 318, and sets the TCP clock rate estimation of the device to a predetermined TCP clock rate value. The predetermined TCP clock rate value may be the median value of a set of communications devices, for example, 100 Hz.

After step 313, the apparatus 226 moves on to step 314. At step 314, the apparatus determines if the TCP clock rate estimation is positive and less than a pre-determined threshold. This pre-determined threshold may be, for example 2000 Hz. If the TCP clock rate estimation does not meet the above two requirements, the apparatus 226 determines that there is an error and discards the TCP clock rate estimation at step 316. The apparatus is configured to discard the TCP clock rate estimation of the device if the TCP clock rate estimation of the device is not positive and less than a pre-determined threshold. In some arrangements, apparatus 226 executes no further processing of these particular data flows 112n. If the TCP clock rate estimation meets the two requirements, apparatus 226 proceeds to step 315.

At step 315, it is determined whether the TCP clock rate estimation will be quantized. If it will not be quantized, apparatus 226 proceeds to step 320 and the TCP clock rate estimation procedure is ended. If TCP clock rate estimation will be quantized, apparatus 226 moves to step 317.

An exemplary technique for quantizing the TCP clock rate estimation is presented in Figure 3(c) and starts at step 321.

If, at step 322, the TCP clock rate estimation is less than a first frequency, in this example, 150 Hz or thereabouts, the apparatus 226 quantises the rate to a first quantised rate, 100 Hz or thereabouts in this example at step 323a. That is, the quantised rate of the device is a first quantised rate if the TCP clock rate estimation of the device is less than a first frequency. If the TCP clock rate estimation is not less than the first frequency (150 Hz), the TCP clock rate estimation is quantised to a second quantised rate, 1000 Hz or thereabouts in this example at step 323b. That is, the quantised rate of the device is a second quantised rate if the TCP clock rate estimation of the device is greater than the first frequency. The TCP clock rate quantization procedure finishes at step 324. It will be appreciated that the apparatus derives the quantised rate of the device by deriving a TCP clock rate estimation of the device.

After step 310, the apparatus derives a fingerprint of the communications device using the first TCP timestamp, the first real timestamp, and a TCP clock rate estimation of the device at step 330. It will be remembered that the TCP clock rate estimation is derived using the first and second TCP timestamps and the first and second real timestamps for the TCP clock rate estimation to be used in the fingerprint derivation. As such, it will be appreciated that the fingerprint of the device is derived based on the first and second TCP timestamps and the first and second real timestamps.

One exemplary method for deriving the fingerprint is given by the following equation:

$$fprint = \frac{cap\_ts}{1000} - \frac{1000 * tcp\_ts}{rate}$$

where cap_ts is the real timestamp 106n, tcp_ts is the TCP timestamp 104n, and rate is the TCP clock rate estimation, as determined above.

The use of TCP timestamps for device fingerprinting may preferred over the use of ICMP timestamp requests as it may allow the approaches described herein to remain passive. Also, due to the utility offered by TCP timestamps, they are not commonly blocked by firewalls.

These techniques above may be performed in the context of whether a communications device 202 is arriving on or departing from a network 204, 206. For instance, and in one exemplary arrangement, when determining a fingerprint for a communications device which is, say, arriving on a first network 204, the data flows 112a, 112b which apparatus 226 operates on are the first two data flows received from communications device 226 in the network 204. The real timestamp which is used in the determination is the real timestamp 106a from the first one 112a of these data flows. In one exemplary arrangement, when determining a fingerprint for a communications device which is, say, departing from first network 204, the data flows 112a, 112b which apparatus 226 operates on are the last two data flows received from communications device 226 in the network 204. The real timestamp which is used in the determination is the real timestamp 106b from the last one 112b of these data flows received in the network from the communications device. It can be seen that the fingerprint encodes information about both the TCP and real timestamps. The scaling of cap_ts and tcp_ts may be performed in order for the two timestamps to be in the same order of magnitude. In the exemplary equation given above, this can be seen with the introduction of the factor of 1000, introduced because, the TCP timestamp is typically of the order of $10^{12}$ at most and the real timestamp value is typically of the order of $10^{15}$.

At step 324, the apparatus 226 records the fingerprint in database 242. At step 326, the method ends.

Thus, it will be appreciated that figure 3 is a flow diagram illustrating a method 300, performed in an apparatus 226 for deriving a fingerprint of a communications device 202, the method comprising, under control of a processor 232 of apparatus 226: receiving a first data flow 112a and a second data flow 112b from the communications device 202, the first data flow 112a comprising data indicative of a first TCP timestamp 104a, and a first real timestamp 106a of the communications device 202, and the second data flow 112b comprising data indicative of a second TCP timestamp 104b and a second real timestamp 106b of the communications device 202; and deriving the fingerprint for the device based on the first and second TCP timestamps 104a, 104b and the first and second real timestamps 106a, 106b.

It will also be appreciated that Figures 2 and 3 and the foregoing description illustrate and describe an apparatus 226 for deriving a fingerprint of a communications device 202, the apparatus 226 comprising a processor 232 and a memory 234, the apparatus 226 being configured, under control of the processor 232, to execute instructions 236 stored in the memory 234: to receive a first data flow 112a and a second data flow 112b from the communications device 202, the first data flow 112a comprising data indicative of a first TCP timestamp 104a, and a first real timestamp 106a of the communications device 202, and the second data flow 112b comprising data indicative of a second TCP timestamp 104b and a second real timestamp 106b of the communications device 202; to derive the fingerprint for the device 202 based on the first and second TCP timestamps 104a, 104b and the first and second real timestamps 106a, 106b.

Clock rates of different devices: It is known that the timestamp clock of most Android devices ticks at a rate of 100 Hz and its initial value is set so that it overflows in 5 minutes so that wraparound bugs manifest earlier. Furthermore, it is also known that this timestamp clock stops when the device is in deep sleep mode, but remains unaffected otherwise.

Correspondingly for iOS devices, it is known the clock ticks at a rate of 920-1000 Hz, and that the rate is dependent on CPU frequency. According to the experimental findings, the initial timestamp of iOS devices is set in random.

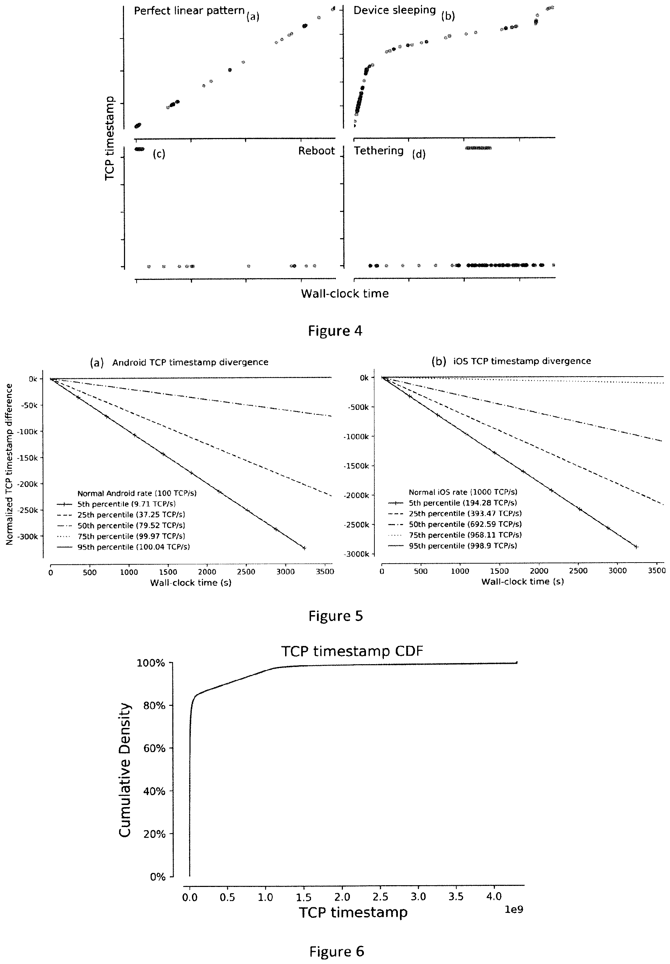

Figure 4 is a series of graphs showing some typical cases of the temporal evolution of the emitted TCP timestamps of mobile devices. Figure 4 displays the TCP timestamp evolution when the mobile device is (a) continually used (perfect linear pattern), is (b) sleeping for certain amounts of time, (c) reboots and (d) uses tethering (concurrent flows with different TCP timestamps originating from the same device).

The linear pattern shown in Figure 4(a) can be contrasted to the sleeping pattern shown in Figure 4(b) in order to gauge the effect of device activity on the emitted timestamp. Figure 4(c) shows the TCP timestamp evolution when a device reboots (the reboot of an Android device), and Figure 4(d) shows the TCP timestamp evolution when the device uses tethering (concurrent flows with significantly different TCP timestamps originating from the same mobile device).

Figure 5 is a series of graphs showing the TCP timestamp divergence compared to nominal as a function of the effective rate. Figure 5(a) shows the TCP timestamp divergence for Android mobile devices, while figure 5(b) shows the TCP timestamp divergence for iOS mobile devices.

The distribution of the effective TCP timestamp rate was calculated from a sample of TCP flows from the mobile network with a total duration of 1-hour. It was found that 36.68% and 26.90% of the devices had an effective rate within 5% of the nominal rate for Android and iOS, respectively. The same sample was used to establish the TCP timestamp distribution, shown in Figure 6. It should be noted that the TCP timestamp is a 32-bit integer, and thus, its range is 0 through 4,294,967,295 (i.e., $2^{32} - 1$) [16].

Figure 6 is a graph showing the TCP timestamp cumulative distribution function of the TCP clocks of the sampled mobile devices. From Figure 6, it can be seen that the distribution of the TCP timestamps is heavily non-uniform, with 84.52% of devices having a TCP timestamp less than $10^8$ (2.32% of the TCP timestamp space), a spike of 0.90% of devices in the last 30 k (explained by the initial TCP timestamp of rebooted Android devices), and 14.57% of the devices in the remaining TCP timestamp space.

The non-uniformity of the TCP timestamp distribution results in an increased chance of collision (i.e., two devices having a TCP timestamp difference less than a predetermined margin). As an example, a margin equal to 20 k TCP timestamp units around i) the median TCP timestamp, ii) a TCP timestamp of $2.1 \times 10^9$ (i.e., close to the mid-point of the TCP space), and iii) in the uniform distribution case, includes 0.0776%, 0.0001%, and 0.0002%, respectively, of the total devices.

It should be noted that multiple devices may be connected to the same fixed connection, and that no unique device identifier is reliably emitted. In one implementation, a simple method may be employed to de-NAT all such devices. The emitted TCP timestamp can be divided in buckets of a predetermined size, for example bucket size of $10^7$ TCP units to reduce the processing burden. For instance, if TCP timestamps belonging to more than one device is allocated to a particular bucket, in one implementation, that is taken as being an instance of a single device behind the access point. The choice of the bucket size may be made as a compromise between the number the buckets to which a single device would be allocated during a single day, and the number of distinct devices that would be allocated to the same bucket. Of course, other methods of de-NAT may also be employed.

Now that exemplary techniques for the derivation of the device 202 fingerprint have been described above, attention is turned to the techniques for using these device fingerprints in an attempt to match data for a device departing from one network to data for a device arriving on a second network as being, potentially, the same device. In the following discussion this is done by attempting to match a fingerprint for a device departure event from a first network to a fingerprint for a device arrival event to a second network.

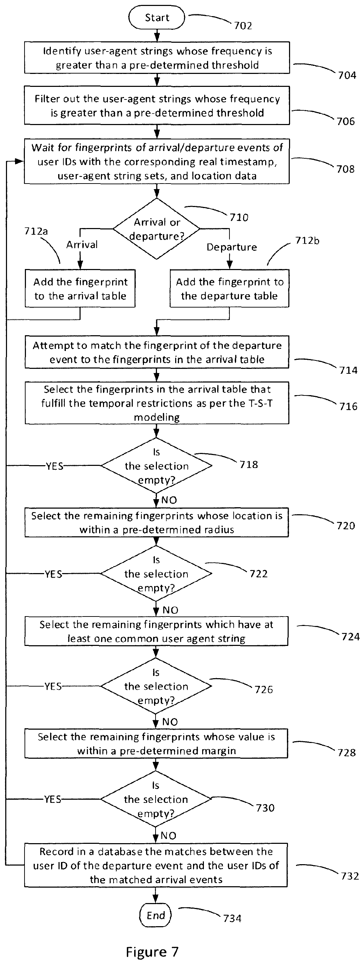

Figure 7 is a flow diagram illustrating a method, performed in a server apparatus, for matching communications devices transitioning between communications networks. As shown in Figure 7, the method 700 starts at step 702. In some arrangements, two passes are performed over the data generated for network arrivals and departures, one for each direction of transition. So, for instance, this can be performed for all departures from the first (e.g. fixed) network 204 with arrivals to the second (e.g. mobile) network 206 and vice versa. It should be noted that the techniques disclosed herein can easily be applied on more than two networks using a one-vs.-one reduction.

The User-Agent (UA) string is transmitted within the HTTP header. This can be used to identify, among others, the application type, the device type, as well as the operating system of the device. While it may be possible to determine that the first and second fingerprints are fingerprints of the same device with an acceptable level of certainty, use of the user-agent strings can, optionally, increase the level of certainty. The UA strings can be used to limit the selection of devices for which matching is considered, in order to decrease the chance of collisions in the TCP space.

Some user-agent strings due to their great comparative frequency and genericness (i.e., not containing any identifying information regarding the device which emitted it) can be omitted as the reduction of the device population in their bucket would not be significant. A characteristic example of such a user-agent string is "Apache-HttpClient/UNAVAILABLE (java 1.4)", which typically has very widespread use, as much as almost 60% penetration. So, at step 704, the server apparatus 250 identifies user agent strings that are above a predetermined user-agent frequency threshold (these user-agent strings can be considered to be "blacklisted"). In this example, the user-agent frequency threshold is a frequency threshold above which the user-agent is not used. That is, the server apparatus 250 is configured to identify user agent strings that are not within a predetermined user agent frequency threshold; and to omit the user agent strings that are not within the predetermined user agent frequency threshold from the determination of whether the first device and the second device have the same user agent string. The precise threshold can be variable, to be set according to specific requirements. That is, common user-agent strings (i.e. those found in high-frequency, above the frequency threshold) are omitted at step 706 from the determination of whether the first device and the second device have at least one identical user agent string.

At step 708, the (matching) server apparatus 250 receives fingerprints derived by (fingerprinting) server apparatus 226 over communications channel 251 and these are stored in database 262. Included amongst these fingerprints are, at least, a first fingerprint derived for a first device transitioning from the first network 204 and a second fingerprint derived for a second device transitioning to the second network 206. Server apparatus 250 also receives at least data indicative of a first real timestamp 106n of the first device and the second real timestamp 106n of the second device, first user agent string 108n of the first device transitioning from the first network 204 and second user agent string 108n of the second device transitioning to the second network. The first and second user agent strings may, preferably, be part of respective first and second user agent string sets comprising multiple user agent strings for the first and second devices. Server apparatus 250 may also receive location - e.g. geo-tag - data in respect of the first device and the second device at the time they transmit the data flow 112n, i.e. first location data of the first device transitioning from the first network and to second location data of the second device transitioning to the second network.

At step 710, the server apparatus 250 examines if the received fingerprint corresponds to an arrival event 308 or to a departure event 309, and correspondingly assigns them to the arrival table at step 712a, or the departure table at step 712b. In some implementations, after step 712b, server apparatus proceeds to step 714 starting an attempt to match the fingerprint of the departure event to the fingerprints in the arrival table as belonging to the same device. In other implementations, step 714 can be reached from step 712a.

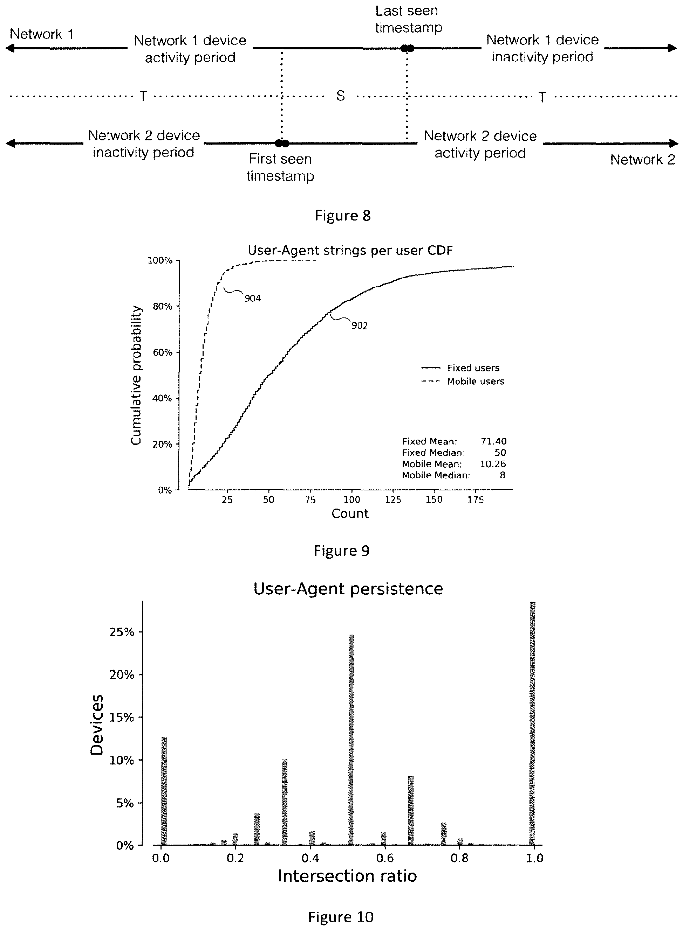

At step 716, the server apparatus 250 selects the fingerprints from the arrival table which fulfil the temporal requirements of the T-S-T modelling described with respect to Figure 8. The first real timestamp is a last-seen timestamp received on the first network for the first device and the second real timestamp is a first-seen timestamp received on the second network for the second device.

Figure 8 illustrates the transitions of devices from and to the different networks, with these being modelled as T-S-T, where T is the exclusive interval during which a device can be connected to only one network, and S is the inclusive interval during which a user may be connected to both networks. In this example, the first real timestamp is from a last data flow received on the first network for the first device and the second real timestamp is from a first data flow received on the second network for the second device. In Figure 8, the first real timestamp is received on the first network at a first time and the second real timestamp is received on the second network at a second time, the first time being later than the second time by at most T. It is to be noted that there may be no overlap period S and a device may transmit its last data flow on the first network before transmitting its first data flow on the second network, but this is not illustrated in Figure 8. But in such an instance, the first real timestamp is received on the first network at a first time and the second real timestamp is received on the second network at a second time, the first time being earlier than or equal to the second time by at most S.

As will become apparent from the ensuing discussion, a significant criterion is that the overlap period is less than the duration S, and a zero overlap period also satisfies this criterion.

In this example, the device is assumed to have departed from a network after T seconds (for example, 600 seconds) of inactivity. In some implementations, on each departure, a check is triggered against all arrivals which are considered fresh. Fresh arrivals are those where the first-seen timestamp of the arrival is no more than S before the last-seen timestamp of the departure so that the overlapping activity is shorter than the maximum permitted overlapping activity. Alternatively, for instances where there is no overlapping activity, a fresh arrival may be matched to a departure where the first-seen timestamp of the arrival is no more T after the last seen timestamp of the departure so that the inactivity gap is less than the maximum permitted inactivity gap as illustrated in Figure 8.

At step 718, it is checked if the selection of fingerprints based on the filtering imposed in step 716 is empty. if so, server apparatus 250 returns to step 708, while in the opposite case, it proceeds to step 720.

At step 720, the server apparatus 250 selects from the remaining fingerprints, the fingerprints whose associated location data is within a predetermined distance from the location of the fingerprint which is attempted to be matched. So, if the first and second location data are the same, or sufficiently close to one another, this can be used to increase the certainty that the first fingerprint and the second fingerprint are fingerprints of the same device. So, server apparatus 250 is configured to receive a first location of the first device transitioning from the first network and to receive a second location of the second device transitioning to the second network; and to determine whether the first location and the second location are within a predetermined distance.

At step 722, it is checked if the selection of fingerprints based on the filtering imposed in step 720 is empty. If so, server apparatus 250 returns to step 708, while in the opposite case, it proceeds to step 724.

At step 724, the server apparatus 250 selects from the remaining fingerprints, the fingerprints whose user-string sets share at least one identical user-agent string with the user-agent string set of the fingerprint which is attempted to be matched. That is, server apparatus 250 is configured to receive first user agent strings of the first device transitioning from the first network and to receive second user agent strings of the second device transitioning to the second network; and to determine whether the first device and second device both have a same user agent string

At step 726, it is checked if the selection of fingerprints based on the filtering imposed in step 724 is empty. If so, server apparatus 250 returns to step 708, while in the opposite case, it proceeds to step 728.

At step 728, the server apparatus 250 selects from the remaining fingerprints, the fingerprints whose value is within a predetermined margin. If this criterion is met, the server apparatus matches and records in the database 262 the first device and second device as being potentially the same device at step 730. For instance, the fingerprint derivation, as demonstrated above, results in a fingerprint value for each fingerprint. If two fingerprint values are sufficiently close to each other, they are considered to be within the fingerprint margin. Say, if a first fingerprint is calculated as having a value of 400, and the fingerprint margin is set to 50, any value for the second fingerprint between 350 and 450 will result in satisfaction of the criterion that the first and second fingerprint margins are within the fingerprint margin. Of course, other ways to evaluate this are possible including, for example, setting the fingerprint margin as a relative quantity instead of an absolute quantity. So, if the fingerprint margin is, say, 10% of the value of one of the fingerprints, that would result in a match if the first fingerprint is (again) has a value of 400 and the second fingerprint has a value between 360 and 440.

From both steps 730 and 732, server apparatus can return to step 708 to wait for the receipt of new fingerprints. In such instances, the server apparatus 250 is configured for the first fingerprint to comprise a first fingerprint value and the second fingerprint to comprise a second fingerprint value, and to determine whether a difference between the first fingerprint value and the second fingerprint value is within the fingerprint margin.

At step 734, the method ends.

All applicable arrivals whose fingerprint is within the matching margin are used to generate matching pairs, and consequently are written to database 262 with the corresponding matching timestamp. It should be noted that all generated pairs from a single transition can be kept due to the fact that possible erroneous matches are extremely unlikely to be repeated, and as such, can be discarded using a simple absolute frequency threshold.

As noted above, the matching of communications devices transitioning between communications networks can be done without the user agent strings of the first and second devices and the location data of the first and second devices. If the first device and the second device both have a same user agent string at step 721, there will be a higher degree of confidence that the first device and second device are the same device. Similarly, if the server apparatus determines that the first location and the second location are within a predetermined distance at step 720, there will be a higher degree of confidence that the first device and second device are the same device.

In the case that the matching of communications devices transitioning between communications networks is done without the user agent strings or the location data, the server apparatus proceeds to step 708 from step 702, and to step 728 from step 718.

In the case that the matching of communications devices transitioning between communications networks is done with the user agent strings, but without the location data, at step 718, the server apparatus proceeds to step 724.

In the case that the matching of communications devices transitioning between communications networks is done with location data but without the user agent strings, at step 704, the server apparatus proceeds to step 708 from step 702, and to step 728 from step 722.

Thus, it will be appreciated that Figure 7 is a flow diagram illustrating a method 700, performed in a server apparatus 250 for matching devices transitioning between communications networks 204, 206, the method 700 comprising, under control of a processor 252 of the server apparatus 250 receiving a first real timestamp for a first device transitioning from a first network 204, a first fingerprint derived for the first device, a second real timestamp for a second device transitioning to a second network and a second fingerprint derived for the second device transitioning to the second network 206. The server apparatus also determines whether the first real timestamp and the second real timestamp were received on their respective networks 204, 206 within a predetermined time period S or T (which predetermined time period we are referring to depending on the order in which first and second real timestamps are received) and whether the first fingerprint and the second fingerprint are within a fingerprint margin of one another and matches the first device and the second device as being, potentially, the same device.

Figure 7 further illustrates that the server apparatus receives first user agent strings of the first device transitioning from the first network and to receive second user agent strings of the second device transitioning to the second network and determines whether the first device and second device both have a same user agent string. As noted above, these user agent strings may be part of user agent string sets for the respective devices.

Figure 7 also illustrates that the server apparatus identifies user agent strings that are not within a predetermined user agent frequency threshold and omits the user agent strings that are not within the predetermined user agent frequency threshold from the determination of whether the first device and the second device have the same user agent string.

Figure 7 further illustrates that the server apparatus receives a first location of the first device transitioning from the first network and a second location of the second device transitioning to the second network and determines whether the first location and the second location are within a predetermined distance.

Thus, it will be appreciated that Figures 2 and 7 and the foregoing description illustrate and describe a server apparatus 250 for matching communications devices 202 transitioning between communications networks 204, the server apparatus comprising a processor and a memory, the server apparatus being configured, under control of the processor, to execute instructions stored in the memory: to receive a first real timestamp for a first device transitioning from a first network 204, a first fingerprint derived for the first device, a second real timestamp for a second device transitioning to a second network 206 and a second fingerprint derived for the second device; to determine whether the first real timestamp 106n and the second real timestamp 106n are received on their respective networks 204, 206 within a predetermined time period S or T; to determine whether the first fingerprint and the second fingerprint are within a fingerprint margin of one another and to match the first device and the second device as being, potentially, the same device.

Using this technique, it may be possible to monitor which fixed network the users are transitioning off from and back onto. For instance, it may be possible to detect that one user is departing his (or her) home Wi-Fi network when they leave their home to go to, say, the shopping mall, and then detects that the user transitions back onto the same home network when they come home. For example, call the fixed home network FIXED_ID_123 and the mobile connection MOBILE_ID_321. When the user exits the FIXED_ID_123 network, it is possible to detect the departure of a device from this network. If this departure can be matched with the arrival of MOBILE_ID_321 to the mobile network, the (FIXED_ID_123, MOBILE_ID_321) pair is recorded. When the user returns home, similarly MOBILE_ID_321 departs from the mobile network and a device arrives in FIXED_ID_123 broadband network. If this is matched as well, the pair (FIXED_ID_123, MOBILE_ID_321) is recorded a second time, thus increasing confidence in the match.

Figure 9 is a graph showing the cumulative distribution function of the UA string count per fixed connection (shown by line 902) and mobile device (shown by line 904) from a single day sample. It can be seen that the fixed connections have significantly more UA strings than mobile devices. This can be explained by the usually great number of devices connecting to the Internet via the same fixed connection (e.g., personal computers, multiple mobile devices, smart appliances, etc.).

Another sample of TCP flows and the corresponding emitted UA strings from the mobile network with a total duration of 1-hour was split in 2 half-hour datasets, in order to investigate the temporal persistence of UA strings, and more specifically, whether a device would be segmented in the same bucket based on the UA strings of the 2 half-hour datasets.

Figure 10 is a chart showing the set intersection ratio of UA strings across two consecutive half-hours per mobile device. It can be seen that, in this sample, 12.77% of the devices have no common UA strings (had an intersection ratio of 0.0) across the two half-hours. Furthermore, the percentage of mobile devices which had at most one UA string per half-hour that were assigned in the same bucket was equal to 76.96%.

it should be noted that while the use of Advertising Identifiers (AIDs) to identify devices across communication networks can seem promising, due to an increasing push towards encrypted transmission of AIDs, this approach may be defeated in the medium term.

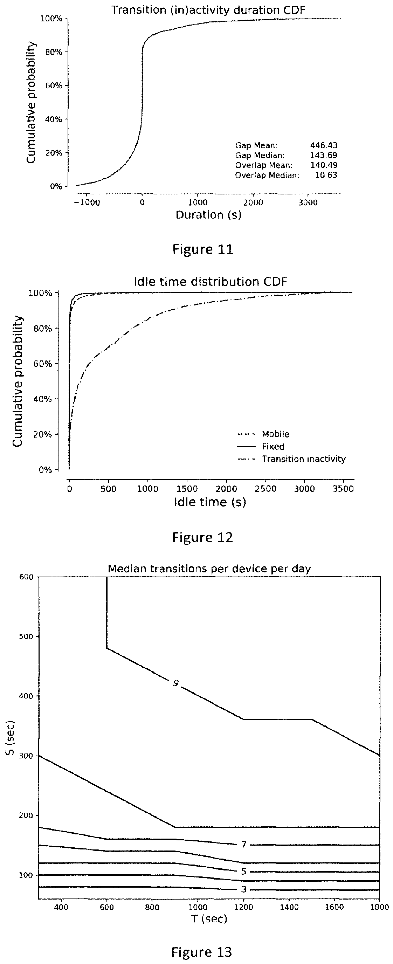

Figure 11 shows the duration of overlapping activity as negative values in an exemplary data set (i.e., the device is generating flows on both the fixed and mobile networks) as well as the duration of the activity gap (i.e., the device is not connected to either network). It can be seen that while the largest part is clustered around zero duration, both the activity gap and overlapping activity medians reach appreciable values. Values greater than 1200 and 3600 seconds for overlapping activity, and activity gap, respectively, are not included as not indicative of normal transitions. It should be noted that the overlapping activity is a result of device settings allowing either the switch between mobile data and WiFi when the WiFi connection is unstable, or WiFi to turn off during sleep mode. Next, the distribution of idle time (i.e., the time gap between two successive flows) is shown in Figure 12 and compared to the transition inactivity gap. It can be seen that the idle time is shorter on the fixed network compared to the mobile. Shorter idle times are linked to heavier usage which can be expected on typically unlimited-data fixed connections.

Finally, the median transitions per device per day in compliance to the T-S-T temporal restrictions are shown in Figure 13. As expected, by relaxing the limitations, the number of usable transitions increases. However, it should be noted that the increase of T (i.e., the permitted maximum inactivity gap) will increase the TCP timestamp difference between the device's clock before and after the transition, possibly increasing the match difficulty.

CONCLUDING DISCUSSION

The variability of the effective TCP timestamp rate, as previously shown in Figure 5, is the main cause of the increased difficulty to match users across different networks, as the effective rate may be significantly different on the two networks to which the device successively connects, resulting in significantly different fingerprints. Furthermore, it can be easily concluded that longer activity gaps can amplify the effect of any rate estimation error.

Figure 6 shows the great non-uniformity of the mobile TCP timestamp distribution, which can largely be attributed to Android mobile phones having a fixed initial TCP timestamp value. The same holds for the TCP timestamp distribution of devices connected to fixed (broadband) connections, as several operating systems reset their TCP timestamp to zero after a reboot. This non-uniformity is one of the causes of the
difficulty to match devices across networks as it essentially limits the TCP space to a far smaller subspace. Due to the above factors, it was necessary to divide the device population to more manageable segments so as to decrease the probability of collisions in the TCP space. The use of user strings was found to be a good solution to this issue as they exhibit great variety. On the other hand, as demonstrated in Figure 10, the User-Agent strings emitted by a device on the two networks may not intersect, and as such, our method will not attempt to match the device with itself resulting in a lost transition.

Segmentation by location may be performed by using the last known mobile network cell to which the device was connected (information available to the network operator) to limit the possible fixed connections to those located in a predetermined radius around the cell.

This segmentation may be very useful in geographically large countries.

A conservative tuning of the method may include using small values for the matching margin frequency threshold for user-agent blacklisting. This conservative tuning is made at the cost of not detecting all possible matches but offers greater confidence in the matches it produces. A very aggressive tuning could be used to allow specific device tracking in cases where possible false matches are not deemed important.

It will be appreciated that the invention has been described by way of example only. Various modifications may be made to the techniques described herein without departing from the spirit and scope of the appended claims. The disclosed techniques comprise techniques which may be provided in a stand-alone manner, or in combination with one another. Therefore, features described with respect to one technique may also be presented in combination with another technique.

REFERENCES

[1] T. Kohno, A. Broido, and K. Claffy, "Remote physical device fingerprinting," IEEE Transactions on Dependable and Secure Computing, vol. 2, no. 2, pp. 93-108, May 2005.

[2] R. Fink, "A statistical approach to remote physical device fingerprinting," in MILCOM 2007 - IEEE Military Communications Conference, Oct. 2007, pp. 1-7.

[3] W. C. Teng and J. D. He, "Entropy-based clock skew measurements for mobile devices," in 2016 Third International Conference on Digital Information Processing, Data Mining, and Wireless Communications (DIPDMWC), July 2016, pp. 268-271.

[4] S. Sharma, A. Hussain, and H. Saran, "Experience with heterogenous clock-skew based device fingerprinting," in Proceedings of the 2012 Workshop on Learning from Authoritative Security Experiment Results, ser. LASER '12. New York, NY, USA: ACM, 2012, pp. 9-18. [Online]. Available: http://doi.acm.org/10.1145/2379616.2379618

[5] L. Polcak and B. Frankova, "On reliability of clock-skew-based remote computer identification," in 2014 11th International Conference on Security and Cryptography (SECRYPT), Aug. 2014, pp.1-8.

[6] M. Cristea and B. Groza, "Fingerprinting smartphones remotely via icmp timestamps," IEEE Communications Letters, vol. 17, no. 6, pp. 1081- 1083, June 2013.

[7] S. M. Bellovin, "A technique for counting natted hosts," in Proceedings of the 2nd ACM SIGCOMM Workshop on Internet Measurement, ser. IMW '02. New York, NY, USA: ACM, 2002, pp. 267-272. [Online]. Available: http://doi.acm.org/10.1145/637201.637243

[8] E. Bursztein, "Time has something to tell us about network address translation," in 12th Nordic Workshop on Secure IT Systems. Springer, 2007.

[9] G. Wicherski, F. Weingarten, and U. Meyer, "Ip agnostic real-time traffic filtering and host identification using tcp timestamps," in 38th Annual IEEE Conference on Local Computer Networks, Oct. 2013, pp. 647-654.

[10] G. Acar, C. Eubank, S. Englehardt, M. Juarez, A. Narayanan, and C. Diaz, "The web never forgets: Persistent tracking mechanisms in the wild," in Proceedings of the 2014 ACM SIGSAC Conference on Computer and Communications Security, ser. CCS '14. New York, NY, USA: ACM, 2014, pp. 674-689. [Online]. Available: http://doi.acm.org/10.1145/2660267 .2660347

[11] E. Vanrykel, G. Acar, M. Herrmann, and C. Diaz, "Leaky birds: Exploiting mobile application traffic for surveillance," pp. 367-384, May 2017.

[12] W. Enck, P. Gilbert, B.-G. Chun, L. P. Cox, J. Jung, P. McDaniel, and A. N. Sheth, "Taintdroid: An information-flow tracking system for realtime privacy monitoring on smartphones," in Proceedings of the 9th USENIX Conference on Operating Systems Design and Implementation, ser. OSDI'10. Berkeley, CA, USA: USENIX Association, 2010, pp. 393-407. [Online]. Available: http://dl.acm.org/citation.cfm?id= 1924943.1924971

[13] R. Stevens, C. Gibler, J. Crussell, J. Erickson, and H. Chen, "Investigating user privacy in android ad libraries."

[14] M. C. Grace, W. Zhou, X. Jiang, and A.-R. Sadeghi, "Unsafe exposure analysis of mobile in-app advertisements," in Proceedings of the Fifth ACM Conference on Security and Privacy in Wireless and Mobile Networks, ser. WISEC '12. New York, NY, USA: ACM, 2012, pp. 101-112. [Online]. Available: http://doi.acm.org/10.1145/2185448.2185464

[15] E. P. Papadopoulos, M. Diamantaris, P. Papadopoulos, T. Petsas, S. Ioannidis, and E. P. Markatos, "The long-standing privacy debate: Mobile websites vs mobile apps," in Proceedings of the 26th International Conference on World Wide Web. International World Wide Web Conferences Steering Committee, 2017, pp. 153-162.

[16] D. A. Borman, R. T. Braden, and V. Jacobson, "TCP Extensions for High Performance," RFC 1323, May 1992. [Online]. Available: https://rfc-editor.org/rfc/rfc1323.txt

**Claims**

1. A server apparatus for deriving a fingerprint of a communications device, the apparatus comprising a processor and a memory, the apparatus being configured, under control of the processor, to execute instructions stored in the memory:

to receive a first data flow and a second data flow from the communications device, the first data flow comprising data indicative of a first TCP timestamp, and a first real timestamp of the communications device, and the second data flow comprising data indicative of a second TCP timestamp and a second real timestamp of the communications device; and

to derive the fingerprint for the device based on the first and second TCP timestamps and the first and second real timestamps.

2. The server apparatus of claim 1, wherein the apparatus is configured to derive the fingerprint of the device using the first TCP timestamp, the first real timestamp, and a TCP clock rate estimation of the device; and, optionally, wherein the apparatus is configured to derive the TCP clock rate estimation of the device using the first and second TCP timestamps and first and second real timestamps; and, further optionally, wherein the apparatus is configured to derive the TCP clock rate estimation of the device by:

   determining if a real timestamp difference between the first real timestamp and the second real timestamp is above a real timestamp difference threshold;
   determining a TCP timestamp difference from the first TCP timestamp and the second TCP timestamp;
   determining a timestamp slope using the real timestamp difference and the TCP timestamp difference; and
   deriving the TCP clock rate estimation of the device as the timestamp slope; or
   setting the TCP clock rate estimation of the device to a predetermined TCP clock rate value if the real timestamp difference is not above the real timestamp difference threshold.

3. The server apparatus of claim 2 when the apparatus is configured to derive the TCP clock rate estimation of the device using the first and second TCP timestamps and first and second real timestamps, further configured to determine if the TCP clock rate estimation of the device is positive and less than a TCP clock rate threshold.

4. The server apparatus of claim 2 when the apparatus is configured to derive the TCP clock rate estimation of the device using the first and second TCP timestamps and first and second real timestamps, further configured to discard the TCP clock rate estimation of the device if the TCP clock rate estimation of the device is not positive and not less than the TCP clock rate threshold.

5. The server apparatus of claim 2 or claim 3, wherein the apparatus is configured to derive a quantised rate of the device by using the TCP clock rate estimation of the device.

6. The server apparatus of claim 4 or claim 5, wherein the quantised rate of the device is a first quantised rate if the TCP clock rate estimation of the device is less than a first frequency.

7. The server apparatus of any of claims 4 to 6, wherein the quantised rate of the device is a second quantised rate if the TCP clock rate estimation of the device is greater than the first frequency.

8. A server apparatus for matching communications devices transitioning between communications networks, the server apparatus comprising a processor and a memory, the server apparatus being configured, under control of the processor, to execute instructions stored in the memory:

   to receive a first real timestamp for a first device transitioning from a first network, a first fingerprint derived for the first device, a second real timestamp for a second device transitioning to a second network and a second fingerprint derived for the second device;
   to determine whether the first real timestamp and the second real timestamp were received on their respective networks within a predetermined time period;
   to determine whether the first fingerprint and the second fingerprint are within a fingerprint margin of one another; and
   to match the first device and the second device as being, potentially, the same device.

9. The server apparatus of claim 8, configured for the first fingerprint to comprise a first fingerprint value and the second fingerprint to comprise a second fingerprint value, and to determine whether a difference between the first fingerprint value and the second fingerprint value is within the fingerprint margin; and, optionally, wherein the first real timestamp is from a last data flow received on the first network for the first device and the second real timestamp is from a first data flow received on the second network for the second device; and, further optionally, wherein the first real timestamp is received on the first network at a first time and the second real timestamp is received on the second network at a second time, the first time being later than the second time by no more than the predetermined time period.

10. The server apparatus of claim 8 or claim 9, wherein the first real timestamp is received on the first network at a first time and the second real timestamp is received on the second network at a second time, the first time being equal to or earlier than the second time by no more than the predetermined time period.

11. The server apparatus of any one of claims 8 to 10, wherein the server apparatus is further configured:

　　to receive first user agent strings of the first device transitioning from the first network and to receive second user agent strings of the second device transitioning to the second network; and to determine whether the first device and second device both have a same user agent string.

12. The server apparatus of claim 11, wherein the server apparatus is configured:

　　to identify user agent strings that are not within a predetermined user agent frequency threshold; and to omit the user agent strings that are not within the predetermined user agent frequency threshold from the determination of whether the first device and the second device have the same user agent string.

13. The server apparatus of any of claims 8 to 12, wherein the server apparatus is further configured:

　　to receive a first location of the first device transitioning from the first network and to receive a second location of the second device transitioning to the second network; and to determine whether the first location and the second location are within a predetermined distance.

14. A method, performed in a server apparatus for deriving a fingerprint of a communications device, the method comprising, under control of a processor of the apparatus:

　　receiving a first data flow and a second data flow from the communications device, the first data flow comprising data indicative of a first TCP timestamp, and a first real timestamp of the communications device, and the second data flow comprising data indicative of a second TCP timestamp and a second real timestamp of the communications device; and deriving the fingerprint for the device based on the first and second TCP timestamps and the first and second real timestamps.

15. A method, performed in a server apparatus for matching devices transitioning between communications networks, the method comprising, under control of a processor of the server apparatus:

receiving a first real timestamp for a first device transitioning from a first network, a first fingerprint derived for the first device, a second real timestamp for a second device transitioning to a second network and a second fingerprint derived for the second device;
determining whether the first real timestamp and the second real timestamp were received on their respective networks within a predetermined time period;
determining whether the first fingerprint and the second fingerprint are within a fingerprint margin of one another; and
matching the first device and the second device as being, potentially, the same device.

107n

106n

Packet associated with user ID 525........    Real timestamp of capture 153423xxxx

● ● ● ●    ● ●

TCP Header

110n    102n    104n    105n

100n

108n

User-agent string in HTTP header

100n    114n    116n

112n

Figure 1

Figure 2

Start — 302

304 — Wait for data flows comprising data indicative of TCP timestamp, real timestamp, and User ID

305 — Check for all active users if their last activity is at most T seconds old

YES

Is the User ID active? — 306

NO

Is the User ID stale? — 307

NO

YES

Arrival event — 308

Departure event — 309

TCP clock rate estimation — 310

Derive fingerprint of the device from the estimated TCP clock rate, TCP timestamp and real timestamp — 330

Record event fingerprint in database — 332

End — 334

Figure 3(a)

Figure 3(b)

Figure 3(c)

Figure 4

Figure 5

Figure 6

Start — 702

Identify user-agent strings whose frequency is greater than a pre-determined threshold — 704

Filter out the user-agent strings whose frequency is greater than a pre-determined threshold — 706

Wait for fingerprints of arrival/departure events of user IDs with the corresponding real timestamp, user-agent string sets, and location data — 708

Arrival or departure? — 710

712a — Arrival

712b — Departure

Add the fingerprint to the arrival table

Add the fingerprint to the departure table

Attempt to match the fingerprint of the departure event to the fingerprints in the arrival table — 714

Select the fingerprints in the arrival table that fulfill the temporal restrictions as per the T-S-T modeling — 716

Is the selection empty? — 718

YES

NO

Select the remaining fingerprints whose location is within a pre-determined radius — 720

Is the selection empty? — 722

YES

NO

Select the remaining fingerprints which have at least one common user agent string — 724

Is the selection empty? — 726

YES

NO

Select the remaining fingerprints whose value is within a pre-determined margin — 728

Is the selection empty? — 730

YES

NO

Record in a database the matches between the user ID of the departure event and the user IDs of the matched arrival events — 732

End — 734

Figure 7

Figure 8

Figure 9

Figure 10

Figure 11

Figure 12

Figure 13

Europäisches
Patentamt

European
Patent Office

Office européen
des brevets

# EUROPEAN SEARCH REPORT

**Application Number**

EP 18 38 6027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 108 234 342 A (BEIJING SOHU NEW MEDIA INFORMATION TECHNOLOGY CO LTD) 29 June 2018 (2018-06-29) * abstract; claims 1-4 * | 1-7,14 | INV. G06F21/44 H04L29/06 H04L29/08 H04W12/00 |
| X,D | BROIDO A ET AL: "Remote Physical Device Fingerprinting", IEEE TRANSACTIONS ON PROFESSIONAL COMMUNICATION, IEEE SERVICE CENTER, PISCATAWAY, NJ, US, vol. 2, no. 2, February 2005 (2005-02), pages 93-108, XP011135161, ISSN: 0361-1434, DOI: 10.1109/TDSC.2005.26 * abstract * * section 1 * * section 3- section 4.4 * * section 6.1-section 6.3 * * section 9.5 - section 9.6 * | 1-7,14 | H04L12/26 H04J3/06 |
| X | US 2011/222421 A1 (JANA SUMAN [US] ET AL) 15 September 2011 (2011-09-15) * paragraph [0025] - paragraph [0050]; figures 5A, 7 * * claims 1-2 * | 1-7,14 | |
| X | US 10 050 731 B1 (MARTIN BRYAN J [US] ET AL) 14 August 2018 (2018-08-14) * column 1 - column 14; figures 1-8 * | 8-10,13, 15 | TECHNICAL FIELDS SEARCHED (IPC) G06F H04L H04W H04J |
| Y | | 11,12 | |
| Y | XP055508758 * chapter 3.2 - chapter 4 * | 11,12 | |
| A | US 2008/244744 A1 (THOMAS SCOTT [AU] ET AL) 2 October 2008 (2008-10-02) * paragraph [0034] - paragraph [0096] * | 8-13,15 | |

The present search report has been drawn up for all claims

| Place of search | Date of completion of the search | Examiner |
|---|---|---|
| Munich | 27 March 2019 | Veshi, Erzim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

Europäisches
Patentamt

European
Patent Office

Office européen
des brevets

**Application Number**

EP 18 38 6027

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
### SHEET B

Application Number

EP 18 38 6027

The Search Division considers that the present European patent application does not comply with the requirements of unity of invention and relates to several inventions or groups of inventions, namely:

1. claims: 1-7, 14

    A method for deriving a fingerprint of a communications device based on TCP timestamps and other timestamps. A clock scew/rate is derived as a slope of the offset of the timestamps and the device fingerprint depends on the clock scew.

    ---

2. claims: 8-13, 15

    A method for matching devices transitioning between communications networks based on timestamps and device fingerprint. Fingerprints and timestamps are received for devices transitioning in one and in the other network, the fingerprints of the devices are compared to be within a certain threshold. If the device fingerprints are within a certain threshold, a matching occurs and it is assumed that the same device transitioned from a network to another.

    ---

**ANNEX TO THE EUROPEAN SEARCH REPORT
ON EUROPEAN PATENT APPLICATION NO.**

EP 18 38 6027

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2019

| Patent document cited in search report | | Publication date | Patent family member(s) | | Publication date |
|---|---|---|---|---|---|
| CN 108234342 | A | 29-06-2018 | NONE | | |
| US 2011222421 | A1 | 15-09-2011 | US 2011222421 A1 | | 15-09-2011 |
| | | | WO 2010030950 A2 | | 18-03-2010 |
| US 10050731 | B1 | 14-08-2018 | NONE | | |
| US 2008244744 | A1 | 02-10-2008 | US 2008244744 A1 | | 02-10-2008 |
| | | | US 2012204262 A1 | | 09-08-2012 |
| | | | US 2015074809 A1 | | 12-03-2015 |
| | | | US 2017251004 A1 | | 31-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. KOHNO ; A. BROIDO ; K. CLAFFY.** Remote physical device fingerprinting. *IEEE Transactions on Dependable and Secure Computing,* May 2005, vol. 2 (2), 93-108
- **R. FINK.** A statistical approach to remote physical device fingerprinting. *MILCOM 2007 - IEEE Military Communications Conference,* October 2007, 1-7
- **W. C. TENG ; J. D. HE.** Entropy-based clock skew measurements for mobile devices. *2016 Third International Conference on Digital Information Processing, Data Mining, and Wireless Communications (DIPDMWC),* July 2016, 268-271
- Experience with heterogenous clock-skew based device fingerprinting. **S. SHARMA ; A. HUSSAIN ; H. SARAN.** Proceedings of the 2012 Workshop on Learning from Authoritative Security Experiment Results. ACM, 2012, 9-18
- **L. POLCAK ; B. FRANKOVA.** On reliability of clock-skew-based remote computer identification. *2014 11th International Conference on Security and Cryptography (SECRYPT),* August 2014, 1-8
- **M. CRISTEA ; B. GROZA.** Fingerprinting smartphones remotely via icmp timestamps. *IEEE Communications Letters,* June 2013, vol. 17 (6), 1081-1083
- **S. M. BELLOVIN.** A technique for counting natted hosts," in Proceedings of the 2nd ACM SIGCOMM Workshop on Internet Measurement. ACM, 2002, 267-272
- Time has something to tell us about network address translation. **E. BURSZTEIN.** 12th Nordic Workshop on Secure IT Systems. Springer, 2007
- **G. WICHERSKI ; F. WEINGARTEN ; U. MEYER.** Ip agnostic real-time traffic filtering and host identification using tcp timestamps. *38th Annual IEEE Conference on Local Computer Networks,* October 2013, 647-654

- The web never forgets: Persistent tracking mechanisms in the wild. **G. ACAR ; C. EUBANK ; S. ENGLEHARDT ; M. JUAREZ ; A. NARAYANAN ; C. DIAZ.** Proceedings of the 2014 ACM SIGSAC Conference on Computer and Communications Security. ACM, 2014, 674-689
- **E. VANRYKEL ; G. ACAR ; M. HERRMANN ; C. DIAZ.** *Leaky birds: Exploiting mobile application traffic for surveillance,* May 2017, 367-384
- Taintdroid: An information-flow tracking system for realtime privacy monitoring on smartphones. **W. ENCK ; P. GILBERT ; B.-G. CHUN ; L. P. COX ; J. JUNG ; P. MCDANIEL ; A. N. SHETH.** Proceedings of the 9th USENIX Conference on Operating Systems Design and Implementation. USENIX Association, 2010, 393-407
- **R. STEVENS ; C. GIBLER ; J. CRUSSELL ; J. ERICKSON ; H. CHEN.** *Investigating user privacy in android ad libraries*
- Unsafe exposure analysis of mobile in-app advertisements. **M. C. GRACE ; W. ZHOU ; X. JIANG ; A.-R. SADEGHI.** Proceedings of the Fifth ACM Conference on Security and Privacy in Wireless and Mobile Networks. ACM, 2012, 101-112
- **E. P. PAPADOPOULOS ; M. DIAMANTARIS ; P. PAPADOPOULOS ; T. PETSAS ; S. LOANNIDIS ; E. P. MARKATOS.** The long-standing privacy debate: Mobile websites vs mobile apps. *Proceedings of the 26th International Conference on World Wide Web. International World Wide Web Conferences Steering Committee,* 2017, 153-162
- **D. A. BORMAN ; R. T. BRADEN ; V. JACOBSON.** TCP Extensions for High Performance. *RFC 1323,* May 1992, https://rfc-editor.org/rfc/rfc1323.txt